# EUROPÄISCHE PATENTANMELDUNG

(11) **EP 3 974 863 A2**
(43) Veröffentlichungstag der Anmeldung: **30.03.2022**
(21) Anmeldenummer: 21197340.9
(22) Anmeldetag: 17.09.2021
(51) Int. Cl.: G01S 7/481, B60Q 1/00, G01S 7/484, G01S 7/486, G01S 17/931, G01S 13/931

(54) **SENSOREINRICHTUNG, SCHEINWERFER, VERFAHREN UND STEUERGERÄT**

(30) Priorität: 25.09.2020 DE 102020125023
(71) Anmelder: Marelli Automotive Lighting Reutlingen (Germany) GmbH, 72762 Reutlingen (DE)
(72) Erfinder: Brill, Johannes, 70567 Stuttgart (DE); Buchberger, Christian, 72770 Reutlingen (DE); Licht, Martin, 72762 Reutlingen (DE)
(74) Vertreter: DREISS Patentanwälte PartG mbB

(57) **Zusammenfassung**

Es wird eine Sensoreinrichtung (100) für ein Kraftfahrzeug bereitgestellt, wobei die Sensoreinrichtung (100) einen in einem Gehäuse (102) angeordneten lichtsensitiven Empfänger (104) und/oder einen in dem Gehäuse (102) angeordneten lichtabstrahlenden Sender (106) umfasst, wobei wenigstens der Empfänger (104) und/oder wenigstens der Sender (106) Licht, welches durch eine eine Lichtdurchtrittsöffnung des Gehäuses (102) verschließende, transparente Abdeckscheibe (108) tritt, empfängt und/oder aussendet, wobei wenigstens eine Korrekturvorrichtung (110) vorgesehen ist, welche dazu eingerichtet ist, einen Strahlengang-verändernden Einfluss der Abdeckscheibe (108) zu kompensieren.

## Beschreibung

Die Erfindung betrifft eine Sensoreinrichtung für ein Kraftfahrzeug, einen Scheinwerfer für ein Kraftfahrzeug, ein Verfahren zum Betreiben einer Sensoreinrichtung und ein Steuergerät für eine Sensoreinrichtung.

Fahrzeugscheinwerfer sind aktuell nicht mit Sensoren für Fahrerassistenzsysteme ausgestattet. Meistens beschränkt sich der Funktionsumfang auf Leuchtsysteme oder Leuchtmodule zur Erzeugung einer Lichtverteilung oder zur Sicherstellung der Signalfunktionen.

Sensoren zur Erfassung der Umgebung des Kraftfahrzeugs hingegen sind üblicherweise hinter planen Flächen angeordnet.

Mithin ist es Aufgabe der Erfindung Sensoreinrichtungen in das Kraftfahrzeug zu integrieren.

Die der Erfindung zugrundeliegende Aufgabe wird durch eine Sensoreinrichtung für ein Kraftfahrzeug gemäß dem Anspruch 1, durch einen Scheinwerfer für ein Kraftfahrzeug gemäß einem nebengeordneten Anspruch, durch ein Verfahren zum Betreiben einer Sensoreinrichtung gemäß einem nebengeordneten Anspruch und durch ein Steuergerät für eine Sensoreinrichtung gemäß einem nebengeordneten Anspruch gelöst. Vorteilhafte Weiterbildungen sind in den Unteransprüchen angegeben und finden sich ferner in der nachfolgenden Beschreibung.

Ein erster Aspekt dieser Beschreibung betrifft eine Sensoreinrichtung für ein Kraftfahrzeug, wobei die Sensoreinrichtung einen in einem Gehäuse angeordneten lichtsensitiven Empfänger und/oder einen in dem Gehäuse angeordneten lichtabstrahlenden Sender umfasst, wobei wenigstens der Empfänger und/oder wenigstens der Sender Licht, welches durch eine eine Lichtdurchtrittsöffnung des Gehäuses verschließende, transparente Abdeckscheibe tritt, empfängt und/oder aussendet, wobei wenigstens eine Korrekturvorrichtung vorgesehen ist, welche dazu eingerichtet ist, einen Strahlengang-verändernden Einfluss der Abdeckscheibe zu kompensieren.

Gestalterische Vorgaben, die den Gesamteindruck des Fahrzeugs wiedergeben, bestimmen im Fahrzeugbau die Ausgestaltung von Scheinwerfern aber auch Sensoreinrichtungen. Folglich sind die zugehörigen Abdeckscheiben meist gekrümmt ausgebildet und folgen einer gekrümmten Fläche. Durch das bereitgestellte Korrekturmittel wird eine Sensoreinrichtung bereitgestellt, welche designtechnische Freiheitsgrade schafft und gleichzeitig eine hohe Sensitivität der Sensoreinrichtung gewährleistet.

Bereitgestellt wird also eine Sensoreinrichtung, welche die optischen Einflüsse einer Abdeckscheibe auf die eigentliche Sensorik wie beispielsweise ein LiDAR-System korrigiert. Aufgrund der 3D-Geometrie der Abdeckscheibe kommt es zu einem Strahlenversatz sowohl im emittierenden als auch beim empfangenden Pfad. Dies bedeutet, dass beispielsweise ein kreisrunder Abstrahlkegel im Empfänger nicht mehr als Kreis, sondern verzerrt in Form z.B. einer Ellipse detektiert wird. Da die zu erwartende Verzeichnung von der geometrischen Form der Abdeckscheibe abhängt, wird dies im Sende- oder Empfangskanal korrigiert. Dadurch können beispielsweise auftretende Hindernisse oder Fahrsituationen korrekt und sicher erkannt werden.

Ein vorteilhaftes Beispiel zeichnet sich dadurch aus, dass die wenigstens eine Korrekturvorrichtung einen dem Sender zugewandten Abschnitt der Abdeckscheibe mit einer Kompensationsgeometrie umfasst.

Die vom Sender abgestrahlte Lichtverteilung wird vorteilhaft durch den bereitgestellten Abschnitt korrigiert. Die Fertigungskosten für die Abdeckscheibe erhöhen sich dadurch nur in geringem Umfang. Insbesondere entfallen zusätzliche Befestigungsmaßnahmen für ein weiteres Korrekturelement. Weitere Korrekturelemente können unter Umständen entfallen.

Diese optische Korrektur hat den Vorteil, dass Strahlen, welche beispielsweise knapp am Detektor vorbeigehen würden, doch noch auf den Detektor gelenkt werden.

Ein vorteilhaftes Beispiel zeichnet sich dadurch aus, dass die wenigstens eine Korrekturvorrichtung einen dem Empfänger zugewandten Abschnitt der Abdeckscheibe mit einer Kompensationsgeometrie umfasst.

Die Lichtverteilung, die den Empfänger erreicht, wird vorteilhaft durch den bereitgestellten Abschnitt korrigiert. Die Fertigungskosten für die Abdeckscheibe erhöhen sich dadurch nur in geringem Umfang. Insbesondere entfallen zusätzliche Befestigungsmaßnahmen für ein weiteres Korrekturelement. Weitere Korrekturelemente können unter Umständen entfallen.

Ein vorteilhaftes Beispiel zeichnet sich dadurch aus, dass die wenigstens eine Korrekturvorrichtung eine zwischen dem Sender und der Abdeckscheibe angeordnete Kompensationsoptik umfasst.

Vorteilhaft wird der Strahlengang der Lichtverteilung vor dem Auftreffen auf die Abdeckscheibe verändert. Damit kann die Geometrie der Abdeckscheibe vorkompensiert werden.

Ein vorteilhaftes Beispiel zeichnet sich dadurch aus, dass die wenigstens eine Korrekturvorrichtung eine zwischen dem Empfänger und der Abdeckscheibe angeordnete Kompensationsoptik umfasst.

Vorteilhaft wird der Strahlengang der Lichtverteilung bei dem Passieren der Abdeckscheibe verändert. Damit wird die Geometrie der Abdeckscheibe nachkompensiert.

Ein vorteilhaftes Beispiel zeichnet sich dadurch aus, dass die wenigstens eine Korrekturvorrichtung ein Steuergerät umfasst, welches eine erste Kompensationsfunktion bereitstellt, die den Sender derart betreibt, sodass die vom Sender ausgestrahlten LiDAR-Lichtstrahlen den Strahlengang-verändernden Einfluss der Abdeckscheibe kompensieren.

So wird beispielsweise eine perspektivische Verzerrung erreicht, welche durch eine auf den vorab bekannten, insbesondere durch die Abdeckscheibe verlaufenden Strahlengang abgestimmte Koordinatentransformation bereitgestellt wird. Mittels der Koordinatentransformation wird das ins Fahrzeugvorfeld projizierte LiDAR-Licht in die korrekten, den Fahrzeugvorraum repräsentierenden Koordinaten transformiert. Damit ist die von der Sensoreinrichtung abgestrahlte LiDAR-Lichtverteilung geeignet, um beispielsweise nach deren Sensierung autonom oder halbautonom arbeitenden Fahrfunktionen zu unterstützen.

Ein vorteilhaftes Beispiel zeichnet sich dadurch aus, dass die wenigstens eine Korrekturvorrichtung ein bzw. das Steuergerät umfasst, welches eine zweite Kompensationsfunktion bereitstellt, die von dem Empfänger empfangene Sensorsignale derart bereitstellt, dass der den Strahlengang-verändernde Einfluss der Abdeckscheibe kompensiert wird.

So wird beispielsweise eine perspektivische Verzerrung erreicht, welche durch eine auf den vorab bekannten, insbesondere durch die Abdeckscheibe verlaufenden Strahlengang abgestimmte Koordinatentransformation bereitgestellt wird. Mittels der Koordinatentransformation wird das rückgestrahlte LiDAR-Licht in die korrekten, das Fahrzeugvorfeld repräsentierenden Koordinaten transformiert. Damit sind die Daten geeignet, um beispielsweise autonom oder halbautonom arbeitenden Fahrfunktionen des Kraftfahrzeugs bereitgestellt zu werden.

Ein vorteilhaftes Beispiel zeichnet sich dadurch aus, dass der Sender ein LiDAR-Sender zum Aussenden von nicht sichtbarem LiDAR-Licht ist.

Ein vorteilhaftes Beispiel zeichnet sich dadurch aus, dass der Empfänger ein LiDAR-Empfänger zum Empfangen von nicht sichtbarem LiDAR-Licht ist.

Ein zweiter Aspekt dieser Beschreibung betrifft einen Scheinwerfer für ein Kraftfahrzeug, wobei der Scheinwerfer ein Lichtmodul zur Abstrahlung von sichtbarem Licht, insbesondere einer Abblendlichtfunktion und/oder einer Fernlichtfunktion, umfasst, und wobei die Sensoreinrichtung gemäß dem ersten Aspekt wenigstens abschnittsweise in den Scheinwerfer integriert ist.

Vorteilhaft kann die Sensoreinrichtung beispielsweise in Form eines Lidarmoduls in den Scheinwerfer integriert werden. Die Abdeckscheibe oder Zwischenscheibe müssen nicht mehr planar ausgebildet werden. Vielmehr sorgt die Korrekturvorrichtung dafür, dass der sendende und empfangende Pfad korrekt kompensiert werden.

Ein dritter Aspekt dieser Beschreibung betrifft ein Verfahren zum Betreiben einer Sensoreinrichtung für ein Kraftfahrzeug, wobei die Sensoreinrichtung einen in einem Gehäuse angeordneten lichtsensitiven Empfänger und/oder einen in dem Gehäuse angeordneten lichtabstrahlenden Sender umfasst, wobei wenigstens der Empfänger und/oder wenigstens der Sender LiDAR-Licht, welches durch eine eine Lichtdurchtrittsöffnung des Gehäuses verschließende, transparente Abdeckscheibe tritt, empfängt und/oder aussendet, wobei wenigstens eine Korrekturvorrichtung einen Strahlengang-verändernden Einfluss der Abdeckscheibe kompensiert.

Ein vierter Aspekt dieser Beschreibung betrifft ein Steuergerät für eine Sensoreinrichtung, welches zur Durchführung des Verfahrens gemäß dem dritten Aspekt eingerichtet ist.

In der Zeichnung zeigen:
- Figuren 1 bis 4: jeweils eine Sensoreinrichtung in schematischer Form;
- Figur 5: einen Scheinwerfer für ein Kraftfahrzeug;
- Figur 6: ein schematisches Blockdiagramm zum Betreiben eines Senders der Sensoreinrichtung; und
- Figur 7: ein schematisches Blockdiagramm zum Betreiben eines Empfängers der Sensoreinrichtung.

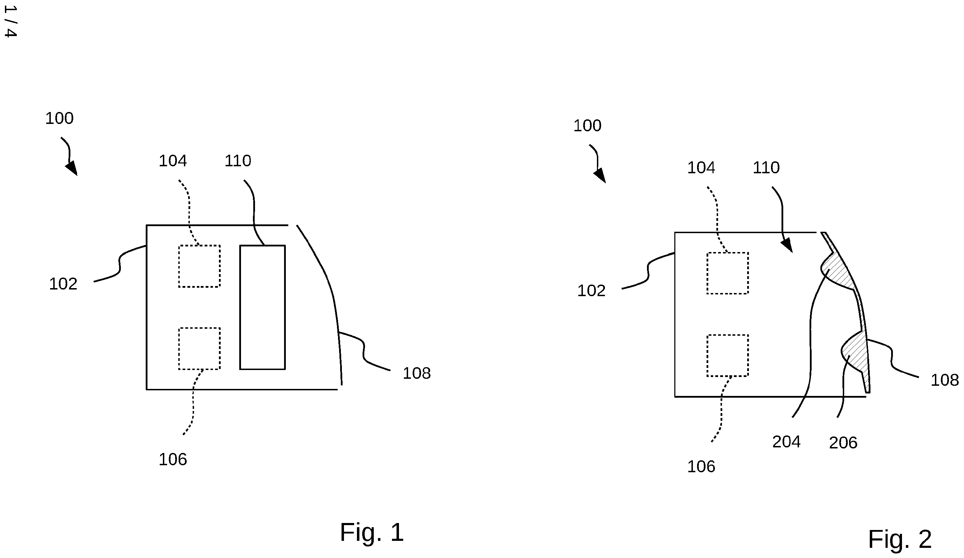

Figur 1 zeigt eine Sensoreinrichtung 100 für ein Kraftfahrzeug in schematischer Form. Die Sensoreinrichtung 100 umfasst einen in einem Gehäuse 102 angeordneten lichtsensitiven Empfänger 104 und/oder einen in dem Gehäuse 102 angeordneten lichtabstrahlenden Sender 106. Wenigstens der Empfänger 104 und/oder wenigstens der Sender 106 empfangen bzw. senden LiDAR-Licht, welches durch eine eine Lichtdurchtrittsöffnung des Gehäuses 102 verschließende, transparente Abdeckscheibe 108 tritt.

Der Sender 106 ist beispielsweise ein LiDAR-Sender zum Aussenden von insbesondere nicht sichtbarem LiDAR-Licht. Der Empfänger 104 ist beispielsweise ein LiDAR-Empfänger zum Empfangen von insbesondere nicht sichtbarem LiDAR-Licht ist.

Es ist wenigstens eine Korrekturvorrichtung 110 vorgesehen, welche dazu eingerichtet ist, einen Strahlengang-verändernden, störenden Einfluss, der beispielsweise durch die Abdeckscheibe 108 oder andere Elemente im Strahlengang verursacht wird, zu kompensieren. Der Strahlengang wird durch die design-vorgegebene Krümmung der Abdeckscheibe 108 so verändert, dass die Korrekturvorrichtung 110 diesen Effekt kompensieren muss, um ein das Fahrzeugvorfeld repräsentierendes Signal zu erzeugen.

Die Korrekturvorrichtung 110 ist folglich beispielsweise ein optisches Element, welches entweder separat ausgeführt ist oder aber welches in das die optische Störung verursachende Element integriert ist. Im letzteren Fall ergibt sich eine einteilige Ausführung des optisch störenden Elements und der Korrekturvorrichtung 110.

In einem alternativen oder zusätzlichen Beispiel ist die Korrekturvorrichtung 110 als Software ausgeführt und korrigiert das empfangene optische Signal nach dem Empfang und/oder das auszusendende optische Signal vor dem Aussenden. Die Signalauswertung erfolgt beispielsweise elektronisch und die Softwarekorrektur kann vor dieser Signalauswertung realisiert werden.

Beispielsweise verwendet man einen unkorrigierten Sender. Das Licht wird von einem Objekt reflektiert und trifft auf den Empfänger. Wegen der optischen Wirkung der Abdeckscheibe tritt beispielsweise ein Strahlversatz auf. Da die optische Wirkung der Abdeckscheibe bekannt ist, wird die Position des Messpunkts entsprechend korrigiert. Mithin ist es möglich, dass die Korrekturvorrichtung 110 sowohl Software zur Korrektur als auch optische Elemente, die insbesondere in das optisch störende Element integriert sind, zur Korrektur bzw. Kompensation des Strahlengang-verändernden Einflusses umfasst.

Die Sensoreinrichtung 100 umfasst in dem gezeigten Beispiel sowohl den Empfänger 104 als auch den Sender 106, also einen Empfangspfad und einen Sendepfad.

In einem Beispiel umfasst die Sensoreinrichtung 100 nur den Empfänger 104 und keinen Sender, also nur den Empfangspfad.

In einem Beispiel umfasst die Sensoreinrichtung 100 nur den Sender 106 und keinen Empfänger, also nur den Sendepfad.

Die beiden letztgenannten Beispiele betreffen Konfigurationen, bei denen die einzelnen Sensoreinrichtungen 100 als Stand-Alone-Modul mit weiteren am Fahrzeug angeordneten Sensoreinrichtungen zusammenarbeiten, was beispielsweise aus Abstrahlwinkel- und Empfangswinkel-Gesichtspunkten sinnvoll sein kann.

Figur 2 zeigt ein Beispiel der Sensoreinrichtung 100 in schematischer Form. Die Sensoreinrichtung 100 umfasst die wenigstens eine Korrekturvorrichtung 110 in Form eines dem Sender 106 zugewandten Abschnitts 206 der Abdeckscheibe 108 mit einer konkaven Kompensationsgeometrie. Des Weiteren ist ein dem Empfänger 104 zugewandten Abschnitt 204 der Abdeckscheibe 108 mit einer konkaven Kompensationsgeometrie vorgesehen. Selbstverständlich kann die Sensoreinrichtung 100 nur den Empfangs- oder Sendepfad umfassen.

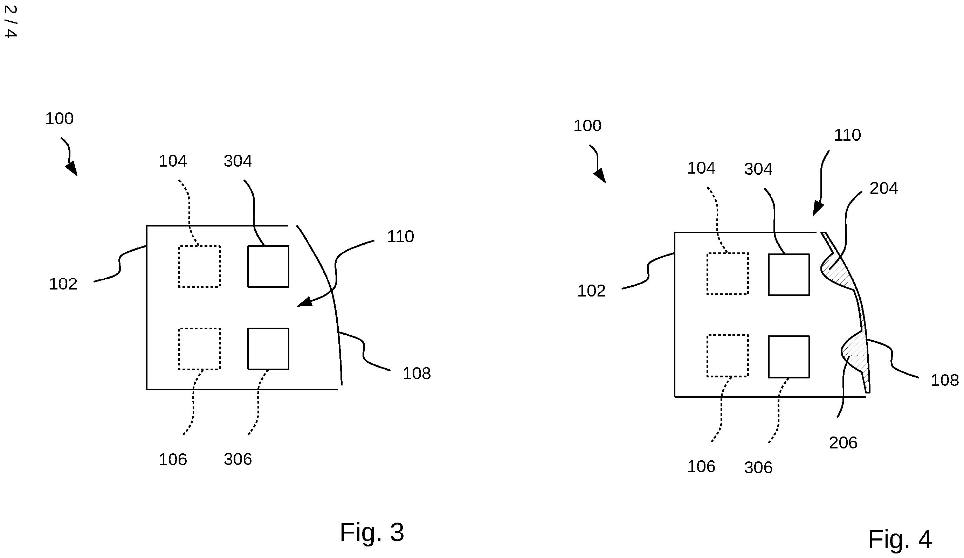

Figur 3 zeigt ein Beispiel der Sensoreinrichtung 100 in schematischer Form. Die Korrekturvorrichtung 110 umfasst eine zwischen dem Sender 106 und der Abdeckscheibe 108 angeordnete Kompensationsoptik 306. Die Korrekturvorrichtung 110 umfasst weitergehend eine zwischen dem Empfänger 104 und der Abdeckscheibe 108 angeordnete Kompensationsoptik 304. Selbstverständlich kann die Sensoreinrichtung 100 nur den Empfangs- oder Sendepfad umfassen.

Figur 4 zeigt ein Beispiel der Sensoreinrichtung 100 in schematischer Form. Die Korrektureinrichtung 110 umfasst die Kompensationsoptiken 304 und 306 sowie die Abschnitte 204 und 206. Selbstverständlich kann die Sensoreinrichtung 100 nur den Empfangs- oder Sendepfad umfassen.

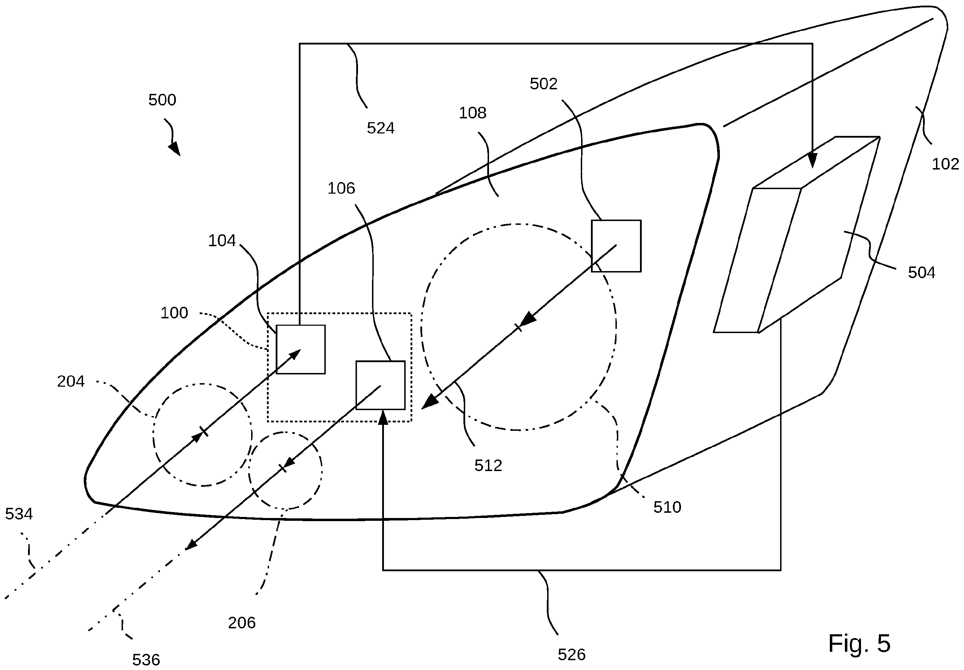

Figur 5 zeigt einen Scheinwerfer 500 für ein Kraftfahrzeug. Die Sensoreinrichtung 100 ist in den Scheinwerfer 500 integriert. Der Scheinwerfer 500 umfasst ein Lichtmodul 502 zur Abstrahlung von für den Fahrzeugführer des Kraftfahrzeugs sichtbarem Licht beispielsweise in Form einer Abstrahllichtverteilung oder einer Fernlichtverteilung. Selbstverständlich können noch weitere Lichtfunktionen in den Scheinwerfer 500 integriert sein.

Die unmittelbar von dem Lichtmodul 502 abgestrahlte Lichtverteilung durchtritt einen Abschnitt 510 der transparenten Abdeckscheibe 108 und wird von dem Scheinwerfer als Abstrahllichtverteilung 512 umfassend sichtbares Licht einer Abblend- und/oder Fernlichtfunktion abgestrahlt.

Dem Scheinwerfer 500 ist ein Steuergerät 504 zugeordnet, welches mindestens die Sensoreinrichtung 100 betreibt. Hierzu umfasst das Steuergerät 504 einen nichtflüchtigen Speicher, auf dem ein Computerprogramm abgespeichert ist, und einen Prozessor. Bei Ausführung des Computerprogramms auf dem Prozessor werden die in dieser Beschreibung erläuterten Verfahrensschritte durchgeführt.

Das Steuergerät 504 erzeugt ein Signal 526 zum Betreiben des Senders 106. Entsprechend dem Signal 526 erzeugt der Sender 106 eine Lichtverteilung, die auf die Abdeckscheibe 108 und gegebenenfalls auf weitere optisch wirksame Elemente, die zwischen Abdeckscheibe 108 und dem Sender 106 angeordnet sind, trifft. Von der Abdeckscheibe 108 wird in Abhängigkeit von der vom Sender 106 erzeugten Lichtverteilung eine Lichtverteilung entlang einer Achse 536 in das Fahrzeugvorfeld abgestrahlt.

Das Steuergerät 504 empfängt ein Signal 524 vom Empfänger 104 der Sensoreinrichtung 100 als Antwort auf die in das Fahrzeugvorfeld abgestrahlte Lichtverteilung. Die rückgeworfene Lichtverteilung trifft mit einer Achse 534 auf die Abdeckscheibe 108. Die Achsen 534 und 536 stellen beispielsweise Symmetrieachsen des jeweiligen optischen Systems im Sinne des Empfangskanals bzw. des Sendekanals dar.

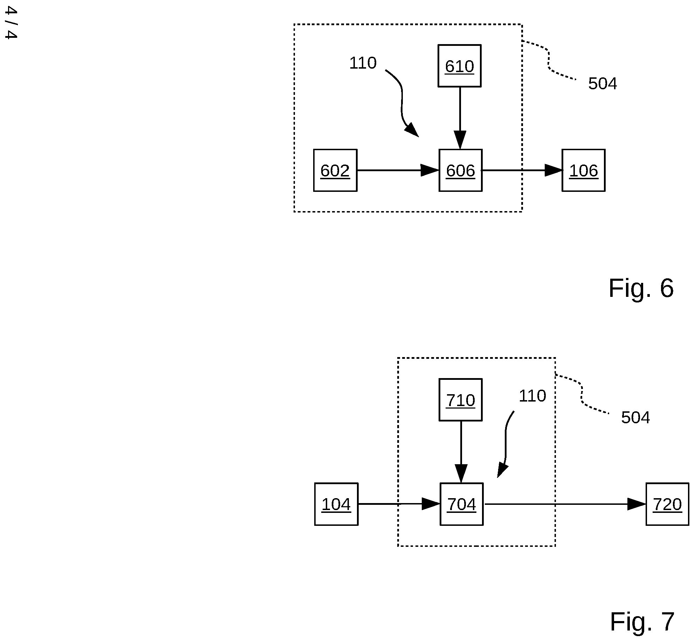

Figur 6 zeigt ein schematisches Blockdiagramm zum Betreiben des Senders 106 der Sensoreinrichtung. Das Steuergerät 504 stellt eine Kompensationsfunktion 606 bereitstellt, die den Sender 106 derart betreibt, sodass die vom Sender 106 ausgestrahlten Lichtstrahlen den Strahlengang-verändernden Einfluss der Abdeckscheibe 108 kompensieren.

Ein Block 602 stellt beispielsweise einen Strom von Einzelbildern bereit, welche die gewünschte vom der Abdeckscheibe abzustrahlende Abstrahllichtverteilung repräsentieren. Für jedes Einzelbild führt die Kompensationsfunktion 606 eine vorab bestimmte Koordinatentransformation durch, indem transformierte Einzelbilder in Abhängigkeit von den empfangenen Einzelbildern und einer vorab bestimmten Transformationsparametern 610 ermittelt werden.

Figur 7 zeigt ein schematisches Blockdiagramm zum Betreiben des Empfängers 104 der Sensoreinrichtung. Das Steuergerät 504 stellt eine Kompensationsfunktion 704 bereitstellt, die vom Empfänger 104 erhaltenen Einzelbilder eines Bildstroms derart korrigiert, sodass der Strahlengang-verändernde Einfluss der Abdeckscheibe kompensiert wird.

Der Empfänger 104 stellt den Bildstrom von empfangenen Einzelbildern bereit. Für jedes Einzelbild führt die Kompensationsfunktion 704 eine vorab bestimmte Koordinatentransformation durch, indem kompensierte Einzelbilder in Abhängigkeit von vom Empfänger 104 stammenden Einzelbildern und von vorab bestimmten Transformationsparametern 710 ermittelt werden.

Die kompensierten Einzelbilder werden dann einer Fahrfunktion 720 bereitgestellt, welche in Abhängigkeit von den das Fahrzeugvorfeld repräsentierenden Einzelbildern beispielsweise Assistenzfunktionen, halb- oder vollautonome Fahrfunktionen für das Kraftfahrzeug bereitstellt.

Die Transformationsparameter 610 und 710 werden a-priori, also in der Applikation oder durch Simulation vorab ermittelt, wobei der gesamte Pfad zwischen der äußeren Oberfläche der Abdeckscheibe bis zum Sender 106 bzw. Empfänger 104 durch die jeweiligen Transformationsparameter repräsentiert wird.

## Patentansprüche

1. Eine Sensoreinrichtung (100) für ein Kraftfahrzeug, wobei die Sensoreinrichtung (100) einen in einem Gehäuse (102) angeordneten lichtsensitiven Empfänger (104) und/oder einen in dem Gehäuse (102) angeordneten lichtabstrahlenden Sender (106) umfasst, wobei wenigstens der Empfänger (104) und/oder wenigstens der Sender (106) Licht, welches durch eine eine Lichtdurchtrittsöffnung des Gehäuses (102) verschließende, transparente Abdeckscheibe (108) tritt, empfängt und/oder aussendet, wobei wenigstens eine Korrekturvorrichtung (110) vorgesehen ist, welche dazu eingerichtet ist, einen Strahlengang-verändernden Einfluss der Abdeckscheibe (108) zu kompensieren.

2. Die Sensoreinrichtung (100) gemäß dem Anspruch 1, wobei die wenigstens eine Korrekturvorrichtung (110) einen dem Sender (106) zugewandten Abschnitt (206) der Abdeckscheibe (108) mit einer Kompensationsgeometrie umfasst.

3. Die Sensoreinrichtung (100) gemäß dem Anspruch 1 oder 2, wobei die wenigstens eine Korrekturvorrichtung (110) einen dem Empfänger (104) zugewandten Abschnitt (204) der Abdeckscheibe (108) mit einer Kompensationsgeometrie umfasst.

4. Die Sensoreinrichtung (100) gemäß einem der vorigen Ansprüche, wobei die wenigstens eine Korrekturvorrichtung (110) eine zwischen dem Sender (106) und der Abdeckscheibe (108) angeordnete Kompensationsoptik (306) umfasst.

5. Die Sensoreinrichtung (100) gemäß einem der vorigen Ansprüche, wobei die wenigstens eine Korrekturvorrichtung (110) eine zwischen dem Empfänger (104) und der Abdeckscheibe (108) angeordnete Kompensationsoptik (304) umfasst.

6. Die Sensoreinrichtung (100) gemäß einem der vorigen Ansprüche, wobei die wenigstens eine Korrekturvorrichtung (110) ein Steuergerät (504) umfasst, welches eine erste Kompensationsfunktion (606) bereitstellt, die den Sender (106) derart betreibt, sodass die vom Sender (106) ausgestrahlten Lichtstrahlen den Strahlengang-verändernden Einfluss der Abdeckscheibe (108) kompensieren.

7. Die Sensoreinrichtung (100) gemäß einem der vorigen Ansprüche, wobei die wenigstens eine Korrekturvorrichtung (110) ein bzw. das Steuergerät (504) umfasst, welches eine zweite Kompensationsfunktion (704) bereitstellt, die von dem Empfänger (104) empfangene Sensorsignale derart bereitstellt, dass der den Strahlengang-verändernde Einfluss der Abdeckscheibe (108) kompensiert wird.

8. Die Sensoreinrichtung (100) gemäß einem der vorigen Ansprüche, wobei der Sender (106) ein LiDAR-Sender zum Aussenden von LiDAR-Licht ist.

9. Die Sensoreinrichtung (100) gemäß einem der vorigen Ansprüche, wobei der Empfänger (104) ein LiDAR-Empfänger zum Empfangen von LiDAR-Licht ist.

10. Ein Scheinwerfer (500) für ein Kraftfahrzeug, wobei der Scheinwerfer (500) ein Lichtmodul (502) zur Abstrahlung von sichtbarem Licht umfasst, und wobei die Sensoreinrichtung (100) gemäß einem der vorigen Ansprüche wenigstens abschnittsweise in den Scheinwerfer (500) integriert ist.

11. Ein Verfahren zum Betreiben einer Sensoreinrichtung (100) für ein Kraftfahrzeug, wobei die Sensoreinrichtung (100) einen in einem Gehäuse (102) angeordneten lichtsensitiven Empfänger (104) und/oder einen in dem Gehäuse (102) angeordneten lichtabstrahlenden Sender (106) umfasst, wobei wenigstens der Empfänger (104) und/oder wenigstens der Sender (106) Licht, welches durch eine eine Lichtdurchtrittsöffnung des Gehäuses (102) verschließende, transparente Abdeckscheibe (108) tritt, empfängt und/oder aussendet, wobei wenigstens eine Korrekturvorrichtung (110) einen Strahlengang-verändernden Einfluss der Abdeckscheibe (108) kompensiert.

12. Das Verfahren gemäß dem Anspruch 11, wobei das Verfahren zum Betreiben der Sensoreinrichtung (100) gemäß einem der Ansprüche 2 bis 9 ausgebildet ist.

13. Ein Steuergerät (504) für eine Sensoreinrichtung (100), welches zur Durchführung des Verfahrens gemäß Anspruch 11 oder 12 eingerichtet ist.
